# EUROPÄISCHE PATENTSCHRIFT

(11) **EP 3 729 032 B1**
(45) Veröffentlichungstag und Bekanntmachung des Hinweises auf die Patenterteilung: **08.09.2021**
(21) Anmeldenummer: 18825651.5
(22) Anmeldetag: 17.12.2018
(51) Int. Cl.: G01K 11/32, H01R 13/66

(54) **ELEKTRISCHER STECKER MIT EINEM TEMPERATURSENSOR**
ELECTRICAL PLUG HAVING A TEMPERATURE SENSOR
CONNECTEUR ÉLECTRIQUE COMPRENANT UN CAPTEUR DE TEMPÉRATURE

(30) Priorität: 22.12.2017 DE 102017131128
(43) Veröffentlichungstag der Anmeldung: 28.10.2020
(73) Patentinhaber: RWE Renewables GmbH, 45145 Essen (DE)
(72) Erfinder: JAHN, Christian, 25451 Quickborn (DE); OBERMEYER, Sebastian, 21147 Hamburg (DE)
(74) Vertreter: Cohausz & Florack
(86) Internationale Anmeldenummer: PCT/EP2018/085253
(87) Internationale Veröffentlichungsnummer: WO 2019/121538

(56) Entgegenhaltungen:
- CN-A- 106 168 511
- CN-A- 106 911 118
- CN-U- 206 313 400
- DE-A1-102015 004 313

## Beschreibung

Die Anmeldung betrifft einen elektrischen Stecker, insbesondere einen Mittelspannungsstecker oder Hochspannungsstecker, für ein Stromkabel (z.B. ein stromführendes Mittelspannungs- oder Hochspannungskabel), umfassend mindestens ein Gehäuse, eingerichtet zum Aufnehmen mindestens eines elektrischen Steckermoduls. Darüber hinaus betrifft die Anmeldung eine Temperaturmessanordnung, ein Temperaturüberwachungssystem und ein Verfahren. Mittelspannungsstecker und/oder Hochspannungsstecker, aber auch andere elektrische Stecker, werden in verschiedenen Systemen eingesetzt, um zwischen Komponenten des Systems eine leitende Verbindung (Leistungs- bzw. Stromfluss) herzustellen. Ein beispielhaftes System ist ein Offshore-Windenergiesystem bzw. ein Offshore-Windpark. In einem solchen System werden Stromkabel, insbesondere stromführende Kabel, wie Seekabel, eingesetzt, um beispielsweise zumindest zwei Windkraftanlagen miteinander oder eine Substation mit einer Windkraftanlage zu verbinden. Um ein Stromkabel mit einer dieser Systemkomponenten zu verbinden, werden elektrische Stecker, z.B. Mittelspannungsstecker und/oder Hochspannungsstecker, verwendet. Ein Stecker wird einerseits mit dem Stromkabel und andererseits mit einem elektrischen Bauteil (z.B. Transformatoren oder Schaltanlagen im Mittel- und Hochspannungsbereich) verbunden. In heutigen Offshore-Windenergiesystemen bzw. Windparks sind typischerweise, abhängig von der Größe des Systems, 500 bis 1500 solcher Stecker verbaut. CN 106 168 511 A offenbart einen Stecker mit einem integrierten faseroptischen Temperatursensor. Die Installation von elektrischen Steckern, insbesondere in Form von Mittelspannungssteckern und/oder Hochspannungssteckern, also die Anbindung an ein Stromkabel, gestaltet sich jedoch schwierig. Zu einer fehlerhaften Installierung kann es beispielsweise kommen, wenn die Leitschicht des Stromkabels zu weit zurückgeschnitten wird. Auch kann der elektrische Kontakt zwischen einer (einzelnen) Phasenleitung und einem Steckermodul in Form eines Kabelanschlussmoduls des Steckers unzureichend sein.

Eine derartige fehlerhafte Installierung kann während des Betriebs zu einer Beschädigung des Steckers und ggf. der anderen elektrischen Komponenten und somit zu einem Ausfall der entsprechenden elektrischen Verbindung führen. Zwar ist es aus dem Stand der Technik bekannt, die ausgefallene Verbindung zu detektieren. Jedoch gestaltet sich die Suche nach der Fehlerursache und insbesondere des Fehlerortes der ausgefallenen Verbindung komplex. Entsprechend komplex und langwierig gestaltet sich damit die Fehlerbeseitigung. Insbesondere kann die Identifizierung eines fehlerhaften elektrischen Steckers in einem Offshore-Windenergiesystem eine lange Zeitdauer in Anspruch nehmen. Dies wiederum kann in einem Offshore-Windenergiesystem zu längeren Stillstandzeiten einer Mehrzahl von Windkraftanlagen und entsprechend hohen Kosten führen.

Daher liegt der Anmeldung die Aufgabe zugrunde, einen elektrischen Stecker, insbesondere einen Mittelspannungsstecker und/oder Hochspannungsstecker, bereitzustellen, der eine zeitnahe Detektion (insbesondere in (nahezu) Echtzeit) eines Steckerfehlers während des Betriebs eines Systems, insbesondere eines Windenergiesystems, ermöglicht.

Die Aufgabe wird gemäß einem ersten Aspekt der Anmeldung durch einen elektrischen Stecker, insbesondere einen Mittelspannungsstecker oder Hochspannungsstecker, für ein Stromkabel gemäß Anspruch 1 gelöst. Der elektrische Stecker umfasst mindestens ein Gehäuse. Das Gehäuse ist eingerichtet zum Aufnehmen mindestens eines elektrischen Steckermoduls. Der elektrische Stecker umfasst mindestens einen in dem Gehäuse angeordneten Lichtwellenleiter als Temperatursensor einer Temperaturmessanordnung.

Im Gegensatz zum Stand der Technik wird ein elektrischer Stecker bereitgestellt, bei dem eine zeitnahe Detektion (insbesondere (nahezu) in Echtzeit) eines Steckerfehlers möglich ist, indem der elektrischer Stecker, insbesondere ein Mittelspannungsstecker oder Hochspannungsstecker, mit einem Temperatursensor in Form eines Lichtwellenleiters ausgestattet ist. Hierdurch kann die Temperatur des Steckers insbesondere in Echtzeit überwacht und erfasst werden. Aus der erfassten Temperatur kann der Betriebszustand des Steckers insbesondere in Echtzeit bestimmt und somit ein Steckerfehler während des Betriebs des Steckers vermieden oder unmittelbar detektiert werden. Aufgrund des geringen Durchmessers eines Lichtwellenleiters kann dieser in einfacher und platzsparender Weise in den Stecker, insbesondere in das Gehäuse, integriert werden. Zudem ermöglicht ein Lichtwellenleiter eine ortaufgelöste Bestimmung der Temperatur des Steckers. Steckerfehler, die in Verbindung mit einer Hitzeentwicklung im elektrischen Stecker entstehen, können demnach frühzeitig erkannt und vermieden werden. Aufgrund der Auswertung (nahezu) in Echtzeit, kann der fehlerhafte Stecker getauscht werden, ohne dass die Windenergieanlage oder eine anderen Vorrichtung wegen des Fehlers deaktiviert werden muss bzw. still stehen muss.

Der elektrische Stecker ist zum Anschluss an mindestens ein Stromkabel eingerichtet. Insbesondere kann ein Stecker mit zumindest einer Leitung eines Stromkabels elektrisch und mechanisch koppelbar sein. Der elektrische Stecker ist insbesondere für Spannungen größer 1 kV ausgelegt. Vorzugsweise kann der elektrische Stecker ein Mittelspannungsstecker (z.B. 1kV bis 36 kV) oder Hochspannungsstecker (z.B. bis 150 kV) sein.

Der anmeldungsgemäße Stecker verfügt über mindestens ein Gehäuse. Das Gehäuse ist eingerichtet, mindestens ein Steckermodul (z.B. ein elektrisches Anschlussmodul für einen elektrischen Kontakt mit dem Stromkabel oder zumindest einer Leitung und/oder Phase des Stromkabels) aufzunehmen. Insbesondere kann das Gehäuse das Steckermodul umschließen. Das Gehäuse kann neben einem mechanischen Schutz eine elektrische Isolation für die elektrischen Komponenten bereitstellen. Zudem weist das Gehäuse einen Feldsteuerkörper auf. Anmeldungsgemäß ist erkannt worden, dass es insbesondere bei einem Installationsfehler eines elektrischen Steckers, also bei einer nicht sachgemäßen mechanischen und/oder elektrischen Ankopplung des Steckers an mindestens eine Leitung eines Stromkabels, zu einem Steckerfehler bzw. Betriebsfehler des Steckers kommen kann. Insbesondere führt eine unsachgemäße Kopplung zwischen Stecker und der mindestens einen Leitung des Stromkabels zu einer Veränderung, insbesondere Erhöhung, der Steckertemperatur bzw. Betriebstemperatur des Steckers. Eine erhöhte Steckertemperatur bzw. Betriebstemperatur kann dann zu einer Beschädigung des Steckers und einer Unterbrechung der entsprechenden elektrischen Verbindung führen.

Um einen Steckerfehler zeitnah, insbesondere schon vor einer Beschädigung des Steckers und einer damit einhergehenden Unterbrechung der entsprechenden elektrischen Verbindung, zu detektieren, wird anmeldungsgemäß vorgeschlagen, den Stecker mit einem (linienförmigen) Temperatursensor in Form eines Lichtwellenleiters auszustatten. Der Lichtwellenleiter ist in dem Gehäuse angeordnet. Der Lichtwellenleiter ist ein Temperatursensor einer Temperaturmessanordnung. Die Temperaturmessanordnung ist insbesondere zum Bestimmen der (augenblicklichen und/oder ortaufgelösten) Temperatur des Steckers eingerichtet.

Der anmeldungsgemäße elektrische Stecker kann im gesamten Mittel- und Hochspannungsnetz, bevorzugt in einem Windkraftsystem oder Photovoltaiksystem eingesetzt werden.

Erfindungsgemäß ist das Gehäuse aus mindestens einer (umlaufenden) Wand mit einer Innenseite und einer Außenseite gebildet.

Der Lichtwellenleiter kann vorzugsweise zumindest teilweise an der Innenseite der Wand angeordnet sein. Insbesondere kann der Lichtwellenleiter an der Innenseite der Wand (direkt) anliegen. Eine Verlegung des Lichtwellenleiters an der Innenseite der Gehäusewand gestaltet sich einfach. Vorzugsweise kann der Lichtwellenleiter durch geeignete Befestigungsmittel (z.B. Klebemittel) nach der Verlegung an der Wand fixiert sein.

Die (Gehäuse-)Wand kann das mindestens eine Steckermodul umschließen und insbesondere zumindest eine Isolationsschicht umfassen. Die Gehäusewand kann vorzugsweise aus einem Kunststoffmaterial hergestellt sein. Beispielsweise kann die Gehäusewand zumindest teilweise aus Ethylen-Propylen-Dien-Kautschuk (EPDM) oder einem Metall (z.B. Stahl) gebildet sein. Es versteht sich, dass andere Materialien verwendet werden können.

Wie bereits beschrieben wurde, ist das Gehäuse aus mindestens einer (umlaufenden) Wand mit einer Innenseite und einer Außenseite gebildet.

Erfindungsgemäß ist der Lichtwellenleiter zumindest teilweise in der Wand (z.B. in der Isolationsschicht) integriert.

Hierdurch ist insbesondere eine feste Positionierung des Lichtwellenleiters möglich. Mit anderen Worten ist eine Verschiebung der Position des Lichtwellenleiters (nahezu) ausgeschlossen. Gleichzeitig bietet die Gehäusewand einen guten mechanischen Schutz für den Lichtwellenleiter. Vorzugsweise kann der Lichtwellenleiter während der Herstellung des Gehäuses bereits in die Gehäusewand integriert werden.

Die Gehäusewand kann insbesondere über einen Sensoranschluss (insbesondere zumindest zwei Anschlusspins für die zwei Enden des mindestens einen Lichtwellenleiters) verfügen. Der Sensoranschluss kann zum Ankoppeln einer (separaten) Temperaturmesseinrichtung und/oder Auswertevorrichtung eingerichtet sein. Die Anschlusspins können durch den Lichtwellenleiter selbst gebildet werden.

Für eine besonders gute Temperaturüberwachung des Steckers ist, erfindungsgemäß, der Lichtwellenleiter in dem Gehäuse in Form von einer Mehrzahl von Wicklungen angeordnet. Vorzugsweise kann die Mehrzahl von Wicklungen bzw. Windungen gleichmäßig über das gesamte Gehäuse verteilt angeordnet sein. Gleichmäßig meint insbesondere, dass der Abstand zwischen zwei benachbarten Wicklungen nahezu gleich sein kann. Beispielsweise kann die Innenseite spiralförmig mit dem Lichtwellenleiter ausgelegt sein und/oder der Lichtwellenleiter spiralförmig durch die Gehäusewand verlegt sein. Hierbei kann der Lichtwellenleiter im Ringschluss von einem ersten Anschlusspin zu dem weiteren Anschlusspin des Sensoranschluss verlegt sein. Insbesondere kann der Abstand derart gewählt sein, dass die Temperatur des gesamten Innenraums des Gehäuses mit einer bestimmten Ortsauflösung erfasst werden kann. Die Ortsauflösung kann derart gewählt sein, dass vorzugsweise sämtliche (kritischen) Steckermodule des Steckers überwacht werden können. Dies ermöglicht nicht nur die Detektion eines fehlerhaften Steckers, sondern auch eine Identifizierung des fehlerhaften Steckermoduls.

Ein elektrischer Stecker gemäß der vorliegenden Anmeldung kann, neben dem Feldsteuermodul, über zusätzliche Steckermodule verfügen. Gemäß einer Ausführungsform kann das zusätzliche Steckermodul ausgewählt sein, aus der Gruppe, umfassend:
- mindestens ein Anschlussmodul, insbesondere ein Schraub- oder Presseingangsanschluss und/oder ein Schraub- oder Pressausgangsanschluss (auch Spannkonus genannt),
- mindestens ein Abschlusseinsatzmodul, insbesondere ein Schraubabschlusseinsatz,
- mindestens ein Kontaktring,
- mindestens eine Spannfeder, und
- mindestens eine Steuerelektrode.

Das Anschlussmodul kann ein Schraub- oder Presseingangsanschluss sein, um mindestens eine Leitung eines Kabels mit dem Stecker elektrisch und mechanisch zu koppeln. Mittels eines Schraub- oder Pressausgangsanschlusses kann an den Stecker ein Steckergegenstück einer weiteren Komponente angeschlossen werden, um eine elektrische Verbindung zwischen der weiteren Komponente und dem Stromkabel, insbesondere der zumindest einen Leitung des Stromkabels, zu ermöglichen. Ein Abschlusseinsatzmodul kann beispielsweise in Form eines Schraubabschlusseinsatzes vorgesehen sein. Ein derartiger Einsatz kann einen kapazitiven Testpunkt bereitstellen. Alternativ oder zusätzlich kann ein Feldsteuereinsatz bzw. ein Feldsteuerkörper in dem Stecker vorgesehen sein. Ein Feldsteuerkörper kann insbesondere in einem Übergangsbereich von einem geschirmten zu einem ungeschirmten Bereich des Stromkabels ein elektrisches Feld an einer Aderschirmkante des Stromkabels beeinflussen bzw. steuern.

Wie zuvor beschrieben wurde, kann vorzugsweise durch eine insbesondere vollständige Auskleidung der Gehäuseinnenseite (und/oder durch eine entsprechende integrierte Lösung) mit Windungen eines Lichtwellenleiters das Steckermodul aus der Mehrzahl von Steckermodulen des Steckers identifiziert werden, welches fehlerhaft ist. Die Identifizierung kann erfolgen, weil ein Steckermodul aufgrund seiner (individuellen) Position in dem Stecker einen bestimmten Bereich des Lichtwellenleiters (stärker) erwärmt. Dieser Temperatur-Peak kann erfasst werden. Ein Steckerfehler kann durch die Zerstörung eines Lichtwellenleiters im Steckermodul ebenfalls positionsgenau erfasst werden

Indem das fehlerhafte Steckermodul identifiziert wird, können die Maßnahmen zur Behebung des Fehlers optimal abgestimmt werden. Während beispielsweise bei einem ersten Steckermodul ein sofortiger Austausch erfolgen sollte, kann bei einer Identifizierung eines anderen Steckermoduls zunächst ein Weiterbetrieb möglich sein. Ggf. kann es erforderlich sein, den Strom, der über den Stecker fließt, um einen bestimmten Wert (zumindest vorübergehend) zu reduzieren.

Ein weiterer Aspekt der Anmeldung ist eine Temperaturmessanordnung für einen zuvor beschriebenen elektrischen Stecker.

Die Temperaturmessanordnung umfasst mindestens einen in dem Stecker als Temperatursensor angeordneten Lichtwellenleiter. Die Temperaturmessanordnung umfasst mindestens eine mit dem Lichtwellenleiter verbundene Temperaturmesseinrichtung. Die Temperaturmesseinrichtung umfasst mindestens ein Temperaturmessmodul. Das Temperaturmessmodul ist zum Bestimmen der Temperatur des Steckers, insbesondere zum ortsaufgelösten Bestimmen der Temperatur des Steckers, eingerichtet.

Die Temperaturmessanordnung kann im gesamten Mittel- und Hochspannungsnetz, insbesondere in einem Windkraftsystem oder Photovoltaiksystem, eingesetzt werden. Wie bereits beschrieben wurde, kann das Gehäuse des Steckers über einen Sensoranschluss verfügen, an dem eine Temperaturmesseinrichtung der Temperaturmessanordnung angeschlossen sein kann. Die anmeldungsgemäße Temperaturmessanordnung ist eine faseroptische Temperaturmessanordnung mit dem wärme- und strahlungsempfindlichen Lichtwellenleiter (insbesondere ein entsprechendes Lichtwellenleiter-Kabel).

Mit Hilfe des Temperaturmessmoduls können die Temperaturwerte in der Glasfaser des Lichtwellenleiters ortsaufgelöst bestimmt werden. Das Temperaturmessmodul kann insbesondere einen Frequenzgenerator, eine Laserquelle, ein optisches Modul, eine Empfängereinheit und/oder eine Mikroprozessoreinheit umfassen und mit dem Lichtwellenleiter (z.B. Quarzglasfaser) gekoppelt sein. Beispielsweise kann die Laserquelle entsprechend einem OFDR (Optical Frequency Domain Reflectometry) - Verfahren innerhalb eines Messintervalls in der Intensität sinusförmig moduliert und in der Frequenz gechirpt werden. Über den Frequenzhub kann die örtliche Auflösung des Reflektometers eingestellt werden.

Das frequenzmodulierte Laserlicht kann in den Lichtwellenleiter eingekoppelt werden. An jedem Ort entlang des Lichtwellenleiters entsteht eine temperaturabhängige Lichtstreuung (Raman-Streulicht), die in alle Raumrichtungen strahlt. Das Raman-Streulicht hängt unmittelbar mit der Steckertemperatur zusammen. Ein Teil des Raman-Streulichts erreicht in Rückwärtsrichtung das Temperaturmessmodul. Das rückgestreute Licht kann spektral gefiltert und in den Messkanälen mittels Photodetektoren in elektrische Signale gewandelt, verstärkt und elektronisch weiterverarbeitet werden. Der Mikroprozessor kann eine Fouriertransformation durchführen und als Zwischenergebnis Raman-Rückstreukurven als Funktion der Länge des Lichtwellenleiters bereitstellen. Die Amplituden der Rückstreukurven sind hierbei proportional zur Intensität der jeweiligen Raman-Streuung. Aus dem Verhältnis der Rückstreukurven kann die Fasertemperatur entlang des Lichtwellenleiters ortsabhängig, also ortsaufgelöst, bestimmt werden. Die Bestimmung der Temperatur umfasst daher allgemein die Bestimmung von ortsabhängigen Temperaturwerten, wobei die Bestimmung (zumindest nahezu) kontinuierlich oder in bestimmten Zeitabständen durchgeführt werden kann.

Ein noch weiterer Aspekt der Anmeldung ist ein Temperaturüberwachungssystem, insbesondere für mindestens einen elektrischen Stecker, vorzugsweise eine Vielzahl von elektrischen Steckern. Das Temperaturüberwachungssystem umfasst mindestens eine zuvor beschriebene Temperaturmessanordnung. Das Temperaturüberwachungssystem umfasst mindestens eine mit der Temperaturmesseinrichtung zumindest verbindbare Auswertevorrichtung, umfassend mindestens ein Auswertemodul. Das Auswertemodul ist zum Bestimmen eines Steckerfehlers bzw. Betriebsfehlers des Steckers zumindest basierend auf der bestimmten Temperatur des Steckers eingerichtet.

Das Temperaturüberwachungssystem kann insbesondere zum Überwachen von mindestens einem zuvor beschriebenen elektrischen Stecker, insbesondere einer Vielzahl dieser Stecker, beispielsweise sämtliche Stecker eines gemeinsamen Stromkabels, verwendet werden. Insbesondere kann das Temperaturüberwachungssystem zum Überwachen von einer Mehrzahl von elektrischen Steckern eines bestimmten (Mittelspannungs- und/oder Hochspannungs-) Systems, wie ein Windkraftsystem mit zwei oder mehr Windkraftanlagen, oder ein Photovoltaiksystem, mit zwei oder mehr Photovoltaikanlagen.

Das Temperaturüberwachungssystem umfasst mindestens eine Auswertevorrichtung. Die Auswertevorrichtung kann mit der zuvor beschriebenen Temperaturmesseinrichtung zumindest verbindbar sein, um die bestimmten Temperaturwerte der Auswertevorrichtung, beispielsweise dem Auswertemodul, bereitzustellen. Neben der separaten Ausgestaltung von Auswertevorrichtung und Temperaturmesseinrichtung ist auch eine Ausgestaltung in einer gemeinsamen Einheit denkbar. Beispielsweise kann die Auswertevorrichtung die Temperaturmesseinrichtung bilden und das Temperaturmessmodul umfassen.

Das Auswertemodul ist eingerichtet, zumindest basierend auf den bereitgestellten Temperaturwerten des mindestens einen Steckers zu bestimmen, ob ein Steckerfehler bei diesem Stecker vorliegt oder nicht. Liegt ein Steckerfehler vor, kann das Auswertemodul beispielsweise das Aussenden einer entsprechenden Nachricht (z.B. an eine zentrale Steuerung des Windkraftsystems oder Photovoltaiksystems) bewirken. Anschließend können zuvor beschriebene Maßnahmen ergriffen werden.

Gemäß einer bevorzugten Ausführungsform des anmeldungsgemäßen Temperaturüberwachungssystems kann die Auswertevorrichtung mindestens ein Vergleichsmodul umfassen. Das Vergleichsmodul kann zum Vergleichen der bestimmten Temperatur (bzw. Temperaturwerte) des Steckers mit mindestens einer Referenztemperatur (bzw. Referenztemperaturwerte) eingerichtet sein. Das Auswertemodul kann zum Bestimmen eines Steckerfehlers des Steckers basierend auf dem Vergleichsergebnis eingerichtet sein. Gemäß einer Ausführungsform kann die Referenztemperatur ein maximal zulässiger (vorgegebener) Temperaturwert sein. Hierbei kann ein Steckerfehler beispielsweise durch eine Detektion eines Überschreitens des Temperaturwerts durch die bestimmte Steckertemperatur festgestellt werden.

Vorzugsweise können eine Mehrzahl von Referenztemperaturwerten für die jeweiligen Steckermodule eines Steckers vorgegeben werden. Insbesondere kann jedem Steckermodul ein unterschiedlicher Referenztemperaturwert zugeordnet sein.

Alternativ oder zusätzlich zu der mindestens einen (fest) vorgegebenen Referenztemperatur kann die mindestens eine Referenztemperatur die bestimmte Temperatur von mindestens einem Referenzstecker sein. Vorzugsweise kann eine Mehrzahl von Referenztemperaturen von einer entsprechenden Mehrzahl von Referenzstecker bereitgestellt werden. Ein Steckerfehler kann in diesem Fall bestimmt werden, wenn die bestimmte Temperatur (bzw. Temperaturwerte) eines ersten Steckers von der einen oder den mehreren Referenztemperatur/en (bzw. Referenztemperaturwert/en) um z.B. einen vorgebbaren Wert abweicht. Als Referenzstecker können insbesondere zumindest ähnlich, vorzugsweise identisch gebildete Stecker des bevorzugt gleichen elektrischen Systems (z.B. Offshore-Windenergiesystem) verwendet werden. Besonders bevorzugt können räumlich benachbarte Stecker als Referenzstecker verwendet werden. Diese weisen in der Regel gleiche Umgebungsbedingungen (z.B. gleiche Umgebungstemperatur, gleicher Umgebungsdruck etc.) auf.

Gemäß einer bevorzugten Ausführungsform kann der Referenzstecker mit einer ersten Phasenleitung eines Stromkabels verbunden sein und der zu überwachende Stecker mit einer weiteren Phasenleitung des (gleichen) Stromkabels. Beispielsweise können die drei Phasenleitungen eines Stromkabels mit jeweils einem anmeldungsgemäßen Stecker versehen sein. Zwei der drei Stecker können für den jeweils verbleibenden Stecker als Referenzstecker dienen. Weicht die erfasste Temperatur von einem ersten der Stecker gegenüber den anderen beiden (Referenz-) Steckern ab, kann auf einen fehlerhaften ersten Stecker geschlossen werden. In zuverlässiger und gleichzeitig einfacher Weise kann ein Steckerfehler eines Steckers bestimmt werden. Insbesondere weisen bei dieser Ausführungsform die Stecker des gleichen Stromkabels nicht nur gleiche Umgebungsbedingungen auf, sondern in der Regel auch eine gleiche Belastung.

Wie bereits beschrieben wurde, kann gemäß einer Ausführungsform das Temperaturmessmodul zum ortsaufgelösten Bestimmen der Temperatur des Steckers entlang des Lichtwellenleiters eingerichtet sein. Das Auswertemodul kann zum Bestimmen eines bestimmten fehlerhaften Steckermoduls basierend auf der bestimmten, ortsaufgelösten Temperatur des Steckers eingerichtet sein.

Ein noch weiterer Aspekt der Anmeldung ist ein Verfahren zum Überwachen eines elektrischen Steckers, insbesondere eines zuvor beschriebenen elektrischen Stecker. Das Verfahren umfasst:
- Messen der Temperatur des Steckers mittels eines in dem Stecker integrierten Temperatursensors,
- Bestimmen eines Steckerfehlers des Steckers zumindest basierend auf der gemessenen Temperatur des Steckers.

Das Verfahren kann insbesondere unter Verwendung einer zuvor beschrieben Temperaturmessanordnung und/oder einem zuvor beschriebenen Temperaturüberwachungssystem durchgeführt werden.

Ein Modul, eine Einrichtung und/oder eine Vorrichtung kann vorliegend Hardwarekomponenten (z.B. Prozessor, Speichermittel etc.) und/oder Softwarekomponenten (Computercode) umfassen.

Es gibt nun eine Vielzahl von Möglichkeiten, den anmeldungsgemäßen elektrischen Stecker, die anmeldungsgemäße Temperaturmessanordnung, das anmeldungsgemäße Temperaturüberwachungssystem und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines elektrischen Steckers gemäß der vorliegenden Anmeldung,
- Fig. 2: eine schematische Ansicht eines Ausführungsbeispiels einer Temperaturmessanordnung gemäß der vorliegenden Anmeldung mit einem Ausführungsbeispiel eines elektrischen Steckers gemäß der vorliegenden Anmeldung,
- Fig. 3: eine schematische Ansicht eines Ausführungsbeispiels eines Temperaturüberwachungssystem gemäß der vorliegenden Anmeldung mit einem Ausführungsbeispiel einer Temperaturmessanordnung gemäß der vorliegenden Anmeldung mit einem Ausführungsbeispiel eines elektrischen Steckers gemäß der vorliegenden Anmeldung,
- Fig. 4: eine schematische Ansicht eines weiteren Ausführungsbeispiels eines Temperaturüberwachungssystem gemäß der vorliegenden Anmeldung mit einem Ausführungsbeispiel einer Temperaturmessanordnung gemäß der vorliegenden Anmeldung mit einem Ausführungsbeispiel eines elektrischen Steckers gemäß der vorliegenden Anmeldung,
- Fig. 5a: eine schematische Ansicht eines weiteren Ausführungsbeispiels eines elektrischen Steckers gemäß der vorliegenden Anmeldung mit eingesetztem Stromkabel,
- Fig. 5b: eine schematische Ansicht des Ausführungsbeispiels gemäß Fig. 5a ohne eingesetztes Stromkabel,
- Fig. 6a: eine schematische Ansicht eines weiteren Ausführungsbeispiels eines elektrischen Steckers gemäß der vorliegenden Anmeldung mit eingesetztem Stromkabel,
- Fig. 6b: eine schematische Ansicht des Ausführungsbeispiels gemäß Fig. 6a ohne eingesetztes Stromkabel, und
- Fig. 7: ein Diagramm eines Ausführungsbeispiels eines Verfahrens gemäß der vorliegenden Anmeldung.

In den Figuren werden für gleiche Elemente gleiche Bezugszeichen verwendet.

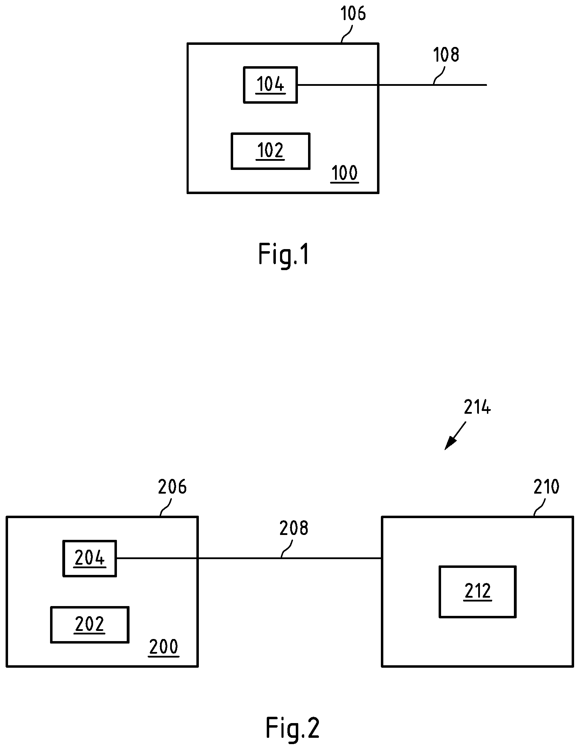

Die Figur 1 zeigt eine schematische Ansicht eines Ausführungsbeispiels eines elektrischen Steckers 100 gemäß der vorliegenden Anmeldung. Der elektrische Stecker kann insbesondere ein Mittelspannungsstecker 100 oder Hochspannungsstecker 100 sein.

Der dargestellte elektrische Stecker 100 umfasst ein Gehäuse 106. Das Gehäuse 106 ist insbesondere aus einer umlaufenden Gehäusewand gebildet. Das Gehäuse 106 umfasst mindestens ein Steckermodul 102. Es versteht sich, dass eine Mehrzahl von Steckermodulen vorgesehen sein kann. Das Gehäuse 106 ist zur Aufnahme des mindestens einen Steckermoduls 102 vorgesehen. Insbesondere umschließt die Gehäusewand des Gehäuses 106 das mindestens eine Steckermodul 102.

Darüber hinaus kann der Figur 1 entnommen werden, dass der elektrische Stecker 100 mindestens einen linienförmigen Temperatursensor 104 umfasst. Der Temperatursensor 104 ist ein Lichtwellenleiter 104 einer (nicht vollständig dargestellten) Temperaturmessanordnung. Über eine (optische) Verbindung 108 kann der Lichtwellenleiter 104 beispielsweise mit einer (nicht gezeigten) Temperaturmesseinrichtung der Temperaturmessanordnung verbunden werden. Mittels des Lichtwellenleiters 104 kann die Temperatur des Steckers 100 (ortsabhängig entlang des Lichtwellenleiters 104) erfasst werden. Insbesondere kann die Temperatur des mindestens einen Steckermoduls 102 des Steckers 100 erfasst werden.

Die Figur 2 zeigt eine schematische Ansicht eines Ausführungsbeispiels einer Temperaturmessanordnung 214, eingerichtet zum Bestimmen der Temperatur eines elektrischen Steckers 200. Zur Vermeidung von Wiederholungen werden nachfolgend im Wesentlichen nur die Unterschiede zu dem Ausführungsbeispiel nach Figur 1 beschrieben. Für die anderen Komponenten der Temperaturmessanordnung 214, insbesondere des Steckers 200, wird insbesondere auf die obigen Ausführungen verwiesen.

Die Temperaturmessanordnung 214 umfasst mindestens eine (separate) Temperaturerfassungseinrichtung 210. Die Temperaturerfassungseinrichtung 210 ist über die zuvor beschriebene optische Verbindung 208 (insbesondere auch ein Lichtwellenleiter) mit dem Lichtwellenleiter 204 verbunden. Die Temperaturerfassungseinrichtung 210 umfasst mindestens ein Temperaturmessmodul 212. Das Temperaturmessmodul 212 kann in zuvor beschriebener Weise Messtechnik, wie einen Frequenzgenerator, eine Laserquelle, ein optisches Modul, eine Empfänger- und Mikroprozessoreinheit umfassen. Das Temperaturmessmodul 212 ist insbesondere zur ortsaufgelösten Temperaturbestimmung des Steckers 200 entlang des Lichtwellenleiters 204 eingerichtet.

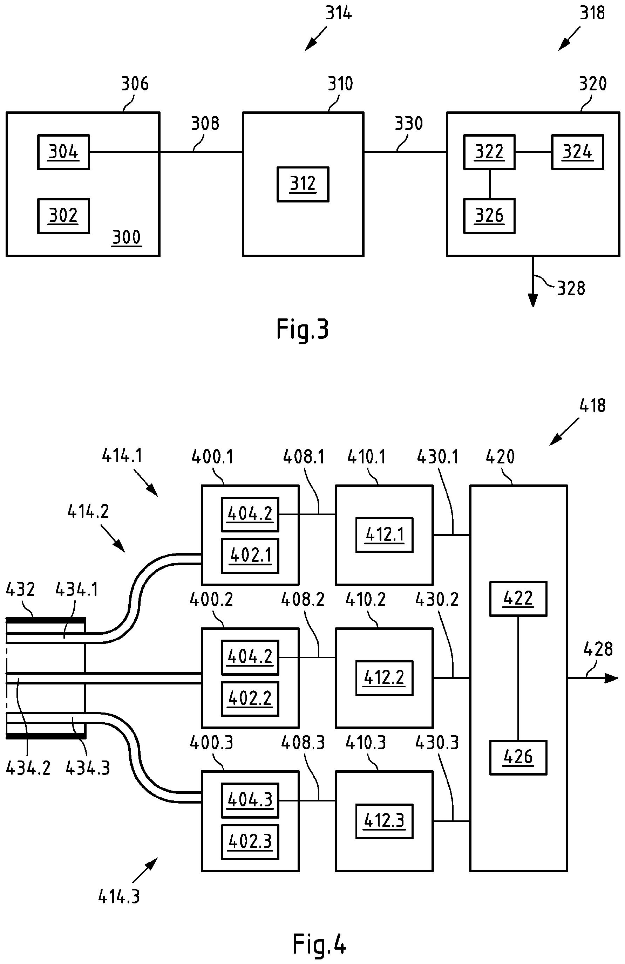

Die Figur 3 zeigt eine schematische Ansicht eines Ausführungsbeispiels eines Temperaturüberwachungssystems 318, eingerichtet zum Überwachen von mindestens einem elektrischen Stecker 300. Zur Vermeidung von Wiederholungen werden nachfolgend im Wesentlichen nur die Unterschiede zu den Ausführungsbeispielen nach Figur 1 und 2 beschrieben. Für die anderen Komponenten des Temperaturüberwachungssystems 318, insbesondere der Temperaturmessanordnung 314, wird auf die obigen Ausführungen verwiesen.

Das Temperaturüberwachungssystem 318 umfasst (neben mindestens einer zuvor beschriebenen Temperaturmessanordnung 314) eine Auswertevorrichtung 320. Die Auswertevorrichtung 320 ist vorliegend über eine (drahtlose und/oder drahtgebundene) Kommunikationsverbindung 330 mit der Temperaturerfassungseinrichtung 310 verbunden. Beispielsweise kann die Auswertevorrichtung 320 eine zentrale Auswertevorrichtung für eine Vielzahl von Temperaturmessanordnungen und/oder elektrischen Steckern sein. Eine entsprechende Auswertevorrichtung 320 kann in einer zentralen Steuerung des Systems (z.B. Steuerung eines Offshore-Windenergiesystems, Steuerung eines Photovoltaiksystems etc.) integriert sein.

Es versteht sich, dass Auswertevorrichtung und Temperaturerfassungseinrichtung gemäß einer anderen Variante (zumindest teilweise) auch in einem gemeinsamen Gehäuse angeordnet sein können. Die Temperaturerfassungseinrichtung 310 ist insbesondere eingerichtet, die bestimmten Temperaturwerte des überwachten Steckers 300 der Auswertevorrichtung 320 bereitzustellen.

Die Auswertevorrichtung 320 umfasst vorliegend mindestens ein Vergleichsmodul 322, mindestens ein Speichermodul 324 und mindestens ein Auswertemodul 326. Das Speichermodul 324 ist insbesondere eingerichtet, zumindest eine (fest) vorgegebene maximal zulässige Referenztemperatur zu speichern.

Das Vergleichsmodul 322 ist zur Durchführung einer Vergleichsoperation eingerichtet. In der Vergleichsoperation wird insbesondere der mindestens eine bereitgestellte Temperaturwert (insbesondere eine ortsabhängige Temperaturfunktion, also insbesondere eine Mehrzahl an ortsabhängigen Temperaturwerten) mit dem mindestens einen gespeicherten Referenztemperaturwert verglichen. Das Vergleichsergebnis wird von dem Auswertemodul 326 ausgewertet, um einen Steckerfehler des Steckers 300 zu bestimmen. Ein Steckerfehler liegt insbesondere dann vor, wenn die bestimmte Steckertemperatur die maximal zulässige Referenztemperatur übersteigt. Das Auswertemodul 326 kann in diesem Fall das Ausgeben einer entsprechenden Nachricht über die weitere Kommunikationsverbindung 328 bewirken. Beispielsweise kann eine (zuvor beschriebene) übergeordnete zentrale Steuerung des Stromsystems informiert werden. Dann können Maßnahmen zur Behebung des Steckerfehlers ergriffen werden. Beispielsweise kann die Steuerung die betroffene elektrische Verbindung identifizieren und automatisch die Strombelastung dieser Verbindung reduzieren.

Die Figur 4 zeigt eine schematische Ansicht eines weiteren Ausführungsbeispiels eines Temperaturüberwachungssystems 418, eingerichtet zum Überwachen von einer Mehrzahl von elektrischen Steckern 400.1 bis 400.3. Zur Vermeidung von Wiederholungen werden nachfolgend im Wesentlichen nur die Unterschiede zu dem Ausführungsbeispiel nach Figur 3 beschrieben. Für die anderen Komponenten des Temperaturüberwachungssystems 418 wird insbesondere auf die obigen Ausführungen verwiesen.

Vorliegend sind drei elektrische Stecker 400.1 bis 400.3 dargestellt. Jeder Stecker 400.1 bis 400.3 umfasst einen zuvor beschriebenen Lichtwellenleiter 404.1 bis 404.3, der jeweils mit einer zuvor beschriebenen Temperaturmesseinrichtung 410.1 bis 410.3 verbunden ist.

Wie zu erkennen ist, ist jeder Stecker 400.1 bis 400.3 mit dem gleichen elektrischen Stromkabel 432 verbunden. Mit anderen Worten sind die Stecker 400.1 bis 400.3 dem gleichen Stromkabel 432 zugeordnet. Insbesondere ist jede (Phasen-)Leitung 434.1 bis 434.3 jeweils mit einem Stecker 400.1 bis 400.3 elektrisch und mechanisch gekoppelt. Wie zuvor beschrieben wurde, wird vorzugsweise (nahezu) kontinuierlich die Temperatur von den jeweiligen Steckern gemessen und insbesondere (nahezu) in Echtzeit ausgewertet.

Zur Auswertung kann die Auswertevorrichtung 420 mindestens ein Vergleichsmodul 422 und mindestens ein Auswertemodul 426 aufweisen. Im Unterschied zu dem vorherigen Ausführungsbeispiel wird als Referenztemperatur für die Steckertemperatur eines ersten Steckers 400.1 zumindest eine, vorzugsweise beide bestimmte/n Temperatur/en der weiteren Stecker 400.2 und 400.3 herangezogen.

Insbesondere ist erkannt worden, dass bei der vorliegenden Ausführungsform die Belastung von den Steckern 400.1 bis 400.3, die demselben Stromkabel 432 zugeordnet sind, (zumindest nahezu) identisch ist. Zudem sind die Umgebungsbedingungen (insbesondere die Umgebungstemperatur, der Umgebungsdruck etc.) für die Stecker 400.1 bis 400.3 (nahezu) gleich.

Anmeldungsgemäß wird vorgeschlagen, die jeweiligen Betriebstemperaturen der Stecker 400.1 bis 400.3 (nahezu) gleichzeitig zu erfassen und diese zeitgleich erfassten Betriebstemperaturen miteinander zu vergleichen. Wird bei diesem Vergleich festgestellt, dass die Betriebstemperatur von einem ersten Stecker 400.1 von den Betriebstemperaturen (die dann als Referenztemperatur dienen) der weiteren Stecker 400.2, 400.3 abweicht (z.B. um mindestens einen vorgebbaren Wert), dann kann das Auswertemodul 426 einen Steckerfehler des ersten Steckers 400.1 bestimmen. Dies ermöglicht eine besonders zeitnahe Detektion von Steckerfehlern.

So kann in dem zuvor genannten Fall (siehe Fig. 3) die absolute Temperatur des fehlerhaften Steckers 400.1 noch zulässig sein (beispielsweise aufgrund einer geringen Belastung und/oder günstigen Umgebungsbedingungen (z.B. niedrige Außentemperatur)). Dennoch kann ein Steckerfehler aufgrund der zuvor beschriebenen anmeldungsgemäßen Auswertung zeitnah detektiert werden. Wie zuvor beschrieben wurde, kann in diesem Fall eine entsprechende Nachricht an eine übergeordnete Steuerung gesendet werden.

Allgemein kann also als Referenztemperatur mindestens eine Temperatur von mindestens einem Referenzstecker erfasst werden, der zumindest eine nahezu gleiche Belastung und/oder nahezu gleiche Umgebungsbedingungen wie der überwachte Stecker erfährt.

Es versteht sich, dass die Auswertevorrichtung zusätzlich ein zuvor beschriebenes Speichermodul umfassen kann (siehe Fig. 3). In dieser Variante können zwei Auswertungen, insbesondere zwei Vergleichsoperationen, durchgeführt werden. Das Vergleichsmodul kann eingerichtet sein, die mindestens eine bereitgestellte Temperatur mit einer fest vorgegebenen maximal zulässigen (absoluten) Referenztemperatur zu vergleichen. Dieses Vergleichsergebnis kann in zuvor beschriebener Weise ausgewertet werden, um einen Steckerfehler eines Steckers zu bestimmen. Zudem können in zuvor beschriebener Weise die (zeitgleich) erfassten Temperaturen der Stecker 400.1 bis 400.3 ausgewertet werden. Eine besonders zuverlässige Fehlerdetektion ist gegeben. Eine Bestimmung der fehlerhaften Phase in einem Schadensfall bei dreiphasigen Spannungssystemen und insbesondere eine genaue Aussage darüber, welcher Stecker beschädigt wurde, kann erreicht werden. So kann die Zeit, die für die Suche des Fehlers benötigt wird, reduziert werden.

Darüber hinaus versteht es sich, dass die Elemente 410.1 bis 410.3 und/oder 420 zumindest teilweise in einem gemeinsamen Gehäuse angeordnet sein können (siehe auch Ausführungen zu Fig. 3).

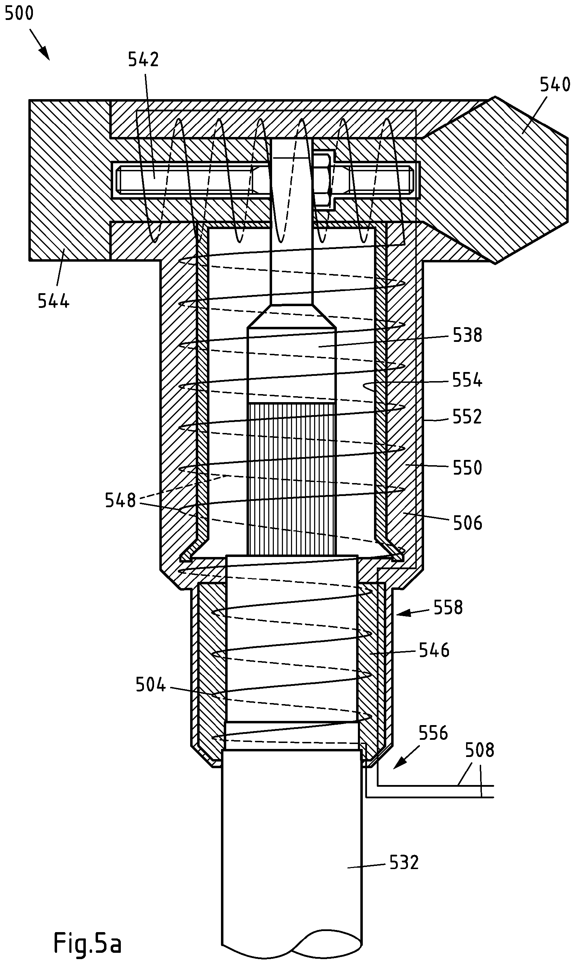

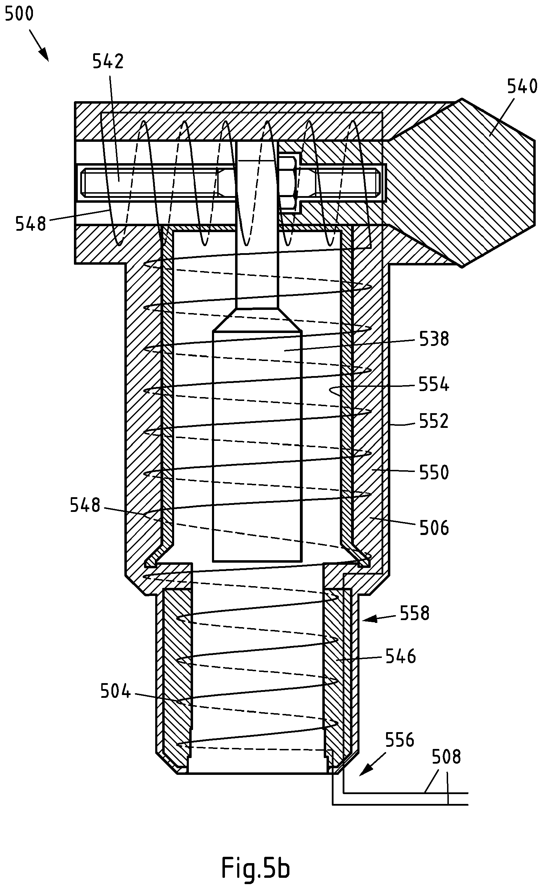

Die Figuren 5a und 5b zeigen eine detailliertere schematische Ansicht eines Ausführungsbeispiels eines elektrischen Steckers 500 gemäß der vorliegenden Anmeldung. Die Figuren 5a und 5b zeigen einen beispielhaften elektrischen Mittelspannungsstecker 500 mit Außenkonus mit eingesetztem Stromkabel 532 (bzw. Leitung) (siehe Fig. 5a) und ohne eingesetztem Stromkabel (siehe Fig. 5b). Zur Vermeidung von Wiederholungen wird nachfolgend auf die vorherigen Ausführungsbeispiele der Figuren 1 bis 4 verwiesen und nachfolgend im Wesentlichen nur die Unterschiede hierzu erläutert.

Der Stecker 500 umfasst ein Gehäuse 506 mit einer (Gehäuse-)Wand 550, die eine Innenseite 554 und eine Außenseite 552 aufweist. Darüber hinaus weist der Stecker 500 eine Mehrzahl von Steckermodulen 538, 540, 542, 546 auf. Vorliegend ist insbesondere ein Schraub- oder Presseingangsanschluss 538 (für das zu koppelnde Stromkabel 532), ein Schraub-Abschlusseinsatz 540 (z.B. mit kapazitivem Testpunkt), ein Schraubkontakt bzw. -ausgangsanschluss 542 (z.B. für ein Steckergegenstück 544) und ein Feldsteuerkörper 546 vorgesehen.

Wie ferner zu erkennen ist, umfasst der Stecker 500 einen linienförmigen Temperatursensor 504 in Form eines Lichtwellenleiters 504. Der Lichtwellenleiter 504 ist in Form von Wicklungen 548 bzw. Windungen 548 verlegt. Insbesondere ist nahezu der gesamte Innenraum des Gehäuses 506 im Wesentlichen gleichmäßig mit dem Lichtwellenleiter 504 versehen. Beispielsweise kann der Lichtwellenleiter 504 an der Innenseite 554 des Gehäuses 506 anliegend verlegt sein. Auch kann vorgesehen sein, dass der Lichtwellenleiter 504 in der Gehäusewand 550 (also zwischen Innenseite 554 und Außenseite 552) integriert verlegt ist. Es versteht sich, dass die zuvor genannten Optionen miteinander kombiniert werden können. Über einen Sensoranschluss 556 kann der Lichtwellenleiter nach außen geführt sein und mit einer (nicht gezeigten) Temperaturmesseinrichtung verbunden sein.

Da der Lichtwellenleiter 506 eine ortsaufgelöste Temperaturmessung ermöglicht und da der Lichtwellenleiter 506 (nahezu) den gesamten Innenraum des Gehäuses 506 abdeckt, in dem die Steckermodule 538, 540, 542, 546 integriert sind, ist insbesondere eine (separate) Temperaturüberwachung und insbesondere Temperaturerfassung von jedem einzelnen Steckermodul 538, 540, 542, 546 möglich.

Ergibt beispielsweise eine Temperaturmessung durch eine Temperaturmesseinrichtung eine erhöhte Temperatur im Bereich 558 und eine anschließende (zuvor beschriebene) Auswertung, dass dieser Temperaturwert 558 (z.B. für eine bestimmte Zeitdauer) eine Referenztemperatur überschritten hat, kann auf einen Steckerfehler in diesem Bereich 558 geschlossen werden. In diesem Fall kann es sich beispielsweise um einen Fehler des Feldsteuerkörpers 546 handeln (beispielsweise aufgrund eines Defekts des Stromkabels 532 in diesem Bereich; das Kabel kann beispielsweise bei der Installation von einem Nutzer beschädigt worden sein). Eine optimale Überwachung des Steckers 500 kann erreicht werden.

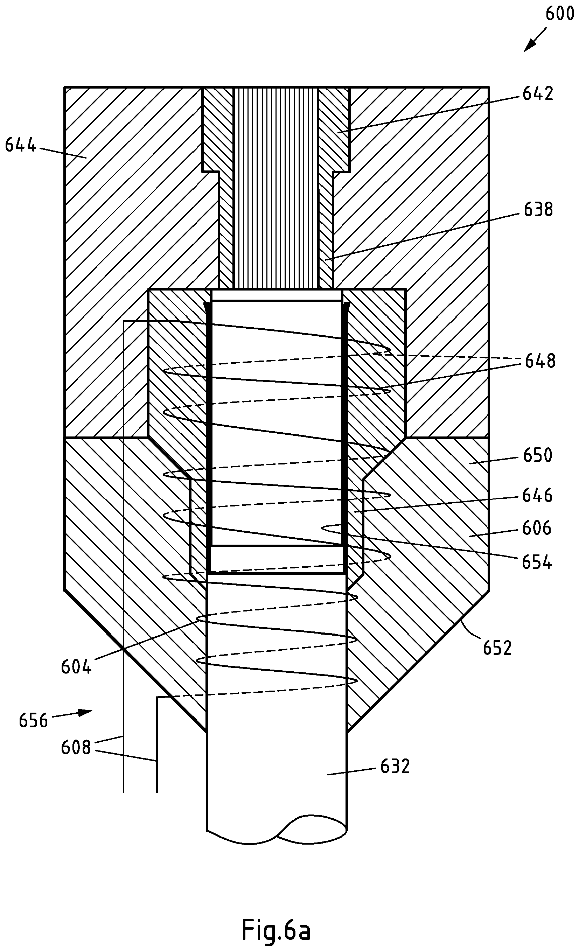

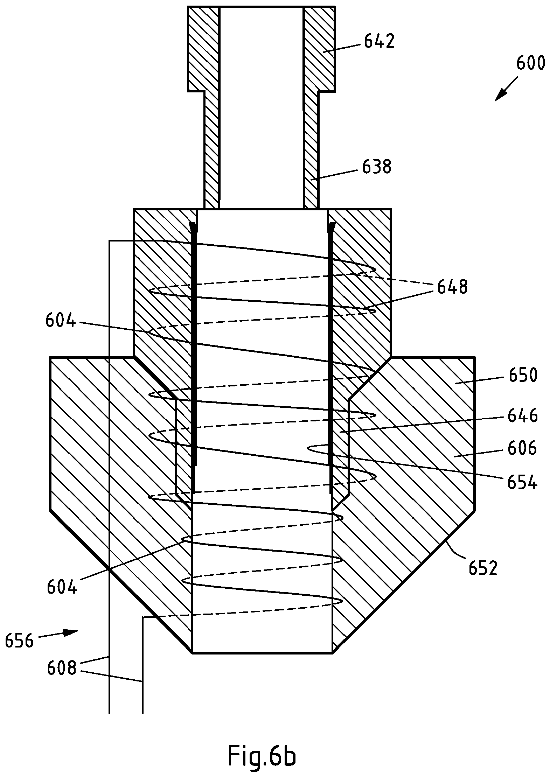

Die Figuren 6a und 6b zeigen eine detailliertere schematische Ansicht eines weiteren Ausführungsbeispiels eines elektrischen Steckers 600 gemäß der vorliegenden Anmeldung. Die Figuren 6a und 6b zeigen einen beispielhaften elektrischen Mittelspannungsstecker 600 mit Innenkonus mit eingesetztem Stromkabel 632 (bzw. Leitung) (siehe Fig. 6a) und ohne eingesetztem Stromkabel (siehe Fig. 6b). Zur Vermeidung von Wiederholungen wird nachfolgend auf das vorherige Ausführungsbeispiel der Figuren 5a und 5b verwiesen. Im Vergleich zu diesem Ausführungsbeispiel unterscheidet sich der Stecker im Wesentlichen durch die geometrische Ausgestaltung. Der Stecker umfasst ein Gehäuse 606, welches die Steckermodule 638, 640, 642, 646 umschließt. Auch in diesem Ausführungsbeispiel ist ein Lichtwellenleiter 604 vorgesehen, der zumindest nahezu den gesamten Innenraum des Gehäuses 606 abdeckt.

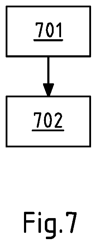

Figur 7 zeigt ein Diagramm eines Ausführungsbeispiels eines Verfahrens gemäß der vorliegenden Anmeldung. In Schritt 701 kann (in zuvor beschriebener Weise) die Temperatur eines Steckers mittels eines in dem Stecker integrierten Temperatursensors erfasst bzw. gemessen werden. Basierend auf der gemessenen Temperatur des Steckers wird dann in Schritt 702 (in zuvor beschriebener Weise) ein Steckerfehler bestimmt.

Grundsätzlich ist eine frühzeitige Erkennung von Steckerfehlern, die z.B. durch eine fehlerhafte Installation oder Alterung des Materials auftreten können, anmeldungsgemäß möglich. Eine permanente Überwachung des Ist-Zustandes von Steckern kann anmeldungsgemäß durchgeführt werden. So können Stillstandszeiten verkürzt und Folgeschäden verhindert oder zumindest reduziert werden.

Insbesondere kann, wie beschrieben wurde, ein Lichtwellenleiter in den Stecker integriert sein. Dieser Lichtwellenleiter kann vorzugsweise zwischen Feldsteuerkörper und Isolierteil, über dem Isolierteil und/oder, falls vorhanden, am Spannungsabgriff des Steckers angebracht bzw. integriert sein. Des Weiteren kann der Lichtwellenleiter den Bereich zwischen zurückgeschnittener äußerer Leitschicht des (MV oder HV) Kabels bis möglichst nah an den Steckerkontakt an der Schaltanlage oder Steckermuffe abdecken. Dies kann erreicht werden, indem der Lichtwellenleiter gleichmäßig in Windungen in den Stecker eingebracht ist. Die eigentliche Ader und ggf. die innere Leitschicht sowie die Aderisolierung des Kabels kann so vollständig umschlossen werden.

Mittels der anmeldungsgemäßen faseroptischen Temperaturmessung lassen sich über Lichtwellenleiter insbesondere Temperaturveränderungen feststellen. Dabei werden optische Fasern als Sensor verwendet, die eine genaue örtliche Zuordnung zulassen und Veränderungen der Temperatur und des Drucks auf die Faser widergeben. Durch die physikalische Veränderung an den Stellen, an denen die Temperatur steigt bzw. der Druck auf die Faser sich verändert, entstehen Reflektionen die in ihrer Rückstreuung Anteile verschiedener Wellenlängen beinhalten. Diese Streuungen lassen sich grob in Rayleigh-Streuung, Ramann-Streuung sowie Brillouin-Streuung einteilen. Während die Rayleigh-Streuung nicht temperaturabhängig ist, sind Ramann und Brillouin temperaturabhängige Streuungen, die, anders als die Rayleigh Streuung, spektral verschoben sind (sogenannte "Stoke" und "Anti Stoke" Bänder). Anti-Stoke Bänder sind hier nochmal deutlich temperaturabhängiger und werden daher vorzugsweise für die Temperaturmessungen verwendet.

Der mindestens eine im Stecker verbaute Lichtwellenleiter kann im Ringschluss auf eine entsprechende Temperaturmesseinrichtung geführt sein.

## Patentansprüche

1. Elektrischer Stecker (100, 200, 300, 400, 500, 600) in Form eines Mittelspannungssteckers (100, 200, 300, 400, 500, 600) oder Hochspannungssteckers (100, 200, 300, 400, 500, 600) für ein Stromkabel (432, 532, 632), umfassend:
- mindestens ein Steckermodul (538, 540, 542, 546, 638, 640, 642, 646)
- mindestens ein Gehäuse (106, 206, 306, 406, 506), eingerichtet zum Aufnehmen des mindestens einen elektrischen Steckermoduls (538, 540, 542, 546, 638, 640, 642, 646), wobei
- der Stecker (100, 200, 300, 400, 500, 600) mindestens einen in dem Gehäuse (106, 206, 306, 406, 506) angeordneten Lichtwellenleiter (104, 204, 304, 404, 504, 604) als Temperatursensor (104, 204, 304, 404, 504, 604) einer Temperaturmessanordnung (214, 314, 414) umfasst,
und wobei
- das Gehäuse (106, 206, 306, 406, 506) aus mindestens einer Wand (550, 650) mit einer Innenseite (554, 654) und einer Außenseite (552, 652) gebildet ist, **dadurch gekennzeichnet, dass** das mindestens eine elektrische Steckermodul ein Feldsteuermodul (546, 646) ist,
- wobei der Lichtwellenleiter (104, 204, 304, 404, 504, 604) zumindest teilweise in der Wand (550, 650) integriert ist, und
- der Lichtwellenleiter (104, 204, 304, 404, 504, 604) in dem Gehäuse (106, 206, 306,406, 506) in Form von einer Mehrzahl von Wicklungen (548, 648) angeordnet ist.

2. Stecker (100, 200, 300, 400, 500, 600) nach Anspruch 1, **dadurch gekennzeichnet, dass**
- das Gehäuse (106, 206, 306, 406, 506) aus mindestens einer Wand (550, 650) mit einer Innenseite (554, 654) und einer Außenseite (552, 652) gebildet ist,
- wobei der Lichtwellenleiter (104, 204, 304, 404, 504, 604) zumindest teilweise an der Innenseite (554, 654) der Wand (550, 650) angeordnet ist, insbesondere an der Innenseite 554, 654) der Wand (550, 650) anliegt.

3. Stecker (100, 200, 300, 400, 500, 600) nach einem der vorherigen Ansprüche 1 bis 3, **dadurch gekennzeichnet, dass**
- die Mehrzahl von Wicklungen (548, 648) gleichmäßig über vorzugsweise das gesamte Gehäuse (106, 206, 306, 406, 506) verteilt angeordnet ist.

4. Stecker (100, 200, 300, 400, 500, 600) nach einem der vorherigen Ansprüche, **dadurch gekennzeichnet, dass** mindestens ein weiteres elektrisches Steckermodul (538, 540, 542, 546, 638, 640, 642, 646) ausgewählt ist, aus der Gruppe, umfassend:
- mindestens ein Kabelanschlussmodul (538, 542, 638, 642), insbesondere ein Schraub- oder Presseingangsanschluss (538, 638) und/oder ein Schraub- oder Pressausgangsanschluss (542, 642),
- mindestens ein Abschlusseinsatzmodul (540, 640), insbesondere ein Schraubabschlusseinsatz (540, 640),
- mindestens eine Steuerelektrode.

5. Temperaturüberwachungssystem mit einer Temperaturmessanordnung (214, 314,414) für elektrische Stecker (100, 200, 300, 400, 500, 600), umfassend:
- mindestens einen elektrischen Stecker (100, 200, 300, 400, 500, 600) nach einem der vorherigen Ansprüche
- mindestens einen in dem Stecker (100, 200, 300, 400, 500, 600) als Temperatursensor (104, 204, 304, 404, 504, 604) angeordneten Lichtwellenleiter (104, 204, 304, 404, 504, 604), und
- mindestens eine mit dem Lichtwellenleiter (104, 204, 304, 404, 504, 604) verbundene Temperaturmesseinrichtung (210, 310, 410), umfassend mindestens ein Temperaturmessmodul (212, 312, 412),
- wobei das Temperaturmessmodul (212, 312, 412) zum Bestimmen der Temperatur des Steckers (100, 200, 300, 400, 500, 600) eingerichtet ist.
- mindestens eine mit der Temperaturmesseinrichtung (210, 310, 410) verbindbare Auswertevorrichtung (320, 420), umfassend mindestens ein Auswertemodul (326, 426),
- wobei die Auswertevorrichtung (320, 420) mindestens ein Vergleichsmodul (322, 422) umfasst, eingerichtet zum Vergleichen einer bestimmten Temperatur des Steckers (100, 200, 300, 400, 500, 600) mit mindestens einer Referenztemperatur,
- wobei die Referenztemperatur die bestimmte Temperatur von mindestens einem Referenzstecker ist, und
- das Auswertemodul (326, 426) zum Bestimmen eines Steckerfehlers des Steckers (100, 200, 300, 400, 500, 600) basierend auf dem Vergleichsergebnis eingerichtet ist.

6. Temperaturüberwachungssystem (318, 418) nach Anspruch 5, **dadurch gekennzeichnet, dass**
- der Referenzstecker ein räumlich benachbarte Stecker zu dem zu überwachenden Stecker ist.

7. Temperaturüberwachungssystem (318, 418) nach Anspruch 5 oder 6, **dadurch gekennzeichnet, dass**
- der Referenzstecker mit einer ersten Phasenleitung eines Stromkabels verbunden ist und der zu überwachende Stecker mit einer weiteren Phasenleitung des gleichen Stromkabels verbunden ist.

8. Temperaturüberwachungssystem (318, 418) nach Anspruch 7, **dadurch gekennzeichnet, dass**
- die drei Phasenleitungen eines Stromkabels jeweils mit einem Stecker versehen sind, und
- zwei der drei Stecker für den jeweils verbleibenden Stecker als Referenzstecker dienen.

9. Temperaturüberwachungssystem (318, 418) nach einem der Ansprüche 5 bis 8, **dadurch gekennzeichnet, dass**
- das Temperaturmessmodul (212, 312, 412) zum ortsaufgelösten Bestimmen der Temperatur des Steckers (100, 200, 300, 400, 500, 600) entlang des Lichtwellenleiters (104, 204, 304, 404, 504, 604) eingerichtet ist, und
- das Auswertemodul (326, 426) zum Bestimmen eines bestimmten fehlerhaften Steckermoduls (538, 540, 542, 546, 638, 640, 642, 646) basierend auf der bestimmten, ortsaufgelösten Temperatur des Steckers (100, 200, 300, 400, 500, 600) eingerichtet ist.

10. Verfahren zum Überwachen eines elektrischen Steckers (100, 200, 300, 400, 500, 600) nach einem der Ansprüche 1 bis 4, umfassend:
- Messen der Temperatur des Steckers (100, 200, 300, 400, 500, 600) mittels eines in dem Stecker (100, 200, 300, 400, 500, 600) integrierten Temperatursensors (104, 204, 304, 404, 504, 604),
- Bestimmen eines Steckerfehlers des Steckers (100, 200, 300, 400, 500, 600) zumindest basierend auf einem Vergleich der gemessenen Temperatur des Steckers (100, 200, 300, 400, 500, 600) und mit mindestens einer Referenztemperatur, wobei die Referenztemperatur die bestimmte Temperatur von mindestens einem Referenzstecker ist.

## Claims

1. Electrical connector (100, 200, 300, 400, 500, 600) in the form of a medium-voltage connector (100, 200, 300, 400, 500, 600) or high-voltage connector (100, 200, 300, 400, 500, 600) for a power cable (432, 532, 632), comprising:
- at least one connector module (538, 540, 542, 546, 638, 640, 642, 646)
- at least one housing (106, 206, 306, 406, 506) configured to receive the at least one electrical connector module (538, 540, 542, 546, 638, 640, 642, 646),
- wherein the connector (100, 200, 300, 400, 500, 600) comprises at least one fiber optic cable (104, 204, 304, 404, 504, 604) arranged in the housing (106, 206, 306, 406, 506) as a temperature sensor (104, 204, 304, 404, 504, 604) of a temperature measuring arrangement (214, 314, 414), and wherein
- the housing (106, 206, 306, 406, 506) is formed by at least one wall (550, 650) having an inner side (554, 654) and an outer side (552, 652), **characterized in that**
- the at least one electrical connector module is a field control module (546, 646),
- wherein the fiber optic cable (104, 204, 304, 404, 504, 604) is at least partially integrated into the wall (550, 650), and
- the fiber optic cable (104, 204, 304, 404, 504, 604) is arranged in the housing (106, 206, 306, 406, 506) in the form of a plurality of windings (548, 648).

2. Connector (100, 200, 300, 400, 500, 600) according to claim 1, **characterized in that**
- the housing (106, 206, 306, 406, 506) is formed by at least one wall (550, 650) having an inner side (554, 654) and an outer side (552, 652),
- wherein the fiber optic cable (104, 204, 304, 404, 504, 604) is arranged at least partially at the inner side (554, 654) of the wall (550, 650), in particular, is positioned against the inner side (554, 654) of the wall (550, 650).

3. Connector (100, 200, 300, 400, 500, 600) according to any of the preceding claims 1 to 3, **characterized in that**
- the plurality of windings (548, 648) is arranged uniformly distributed over preferably the entire housing (106, 206, 306, 406, 506).

4. Connector (100, 200, 300, 400, 500, 600) according to any one of the previous claims, **characterized in that** at least one further electrical connector module (538, 540, 542, 546, 638, 640, 642, 646) is selected from the group comprising:
- at least one cable connector module (538, 542, 638, 642), in particular, a screw or press input connector (538, 638) and/or a screw or press output connector (542, 642),
- at least one termination insert module (540, 640), in particular, a screw termination insert (540, 640),
- at least one control electrode.

5. Temperature monitoring system with a temperature measuring arrangement (214, 314, 414) for electrical connectors (100, 200, 300, 400, 500, 600), comprising:
- at least one electrical connector (100, 200, 300, 400, 500, 600) according to any one of the preceding claims,
- at least one fiber optic cable (104, 204, 304, 404, 504, 604) arranged in the connector (100, 200, 300, 400, 500, 600) as a temperature sensor (104, 204, 304, 404, 504, 604), and
- at least one temperature measuring device (210, 310, 410) connected to the fiber optic cable (104, 204, 304, 404, 504, 604), comprising at least one temperature measuring module (212, 312, 412),
- wherein the temperature measuring module (212, 312, 412) is configured to determine the temperature of the connector (100, 200, 300, 400, 500, 600),
- at least one evaluation device (320, 420) connectable to the temperature measuring device (210, 310, 410), comprising at least one evaluation module (326, 426),
- wherein the evaluation device (320, 420) comprises at least one comparison module (322, 422), configured to compare a determined temperature of the connector (100, 200, 300, 400, 500, 600) with at least one reference temperature,
- wherein the reference temperature is the determined temperature of at least one reference connector, and
- the evaluation module (326, 426) is configured to determine a connector fault of the connector (100, 200, 300, 400, 500, 600) based on the comparison result.

6. Temperature monitoring system (318, 418) according to claim 5, **characterized in that**
- the reference connector is a spatially adjacent connector to the connector to be monitored.

7. Temperature monitoring system (318, 418) according to claim 5 or 6, **characterized in that**
- the reference connector is connected to a first phase line of a power cable and the connector to be monitored is connected to a further phase line of the same power cable.

8. Temperature monitoring system (318, 418) according to claim 7, **characterized in that**
- the three phase lines of a power cable are each provided with a connector, and
- two of the three connectors serve as reference connectors for the respective remaining connector.

9. Temperature monitoring system (318, 418) according to any one of claims 5 to 8, **characterized in that**
- the temperature measuring module (212, 312, 412) is configured to spatially resolved determine the temperature of the connector (100, 200, 300, 400, 500, 600) along the fiber optic cable (104, 204, 304, 404, 504, 604), and
- the evaluation module (326, 426) is configured to determine a particular faulty connector module (538, 540, 542, 546, 638, 640, 642, 646) based on the determined spatially resolved temperature of the connector (100, 200, 300, 400, 500, 600).

10. A method of monitoring an electrical connector (100, 200, 300, 400, 500, 600) according to any one of claims 1 to 4, comprising:
- measuring the temperature of the connector (100, 200, 300, 400, 500, 600) by means of a temperature sensor (104, 204, 304, 404, 504, 604) integrated in the connector (100, 200, 300, 400, 500, 600),
- determining a connector error of the connector (100, 200, 300, 400, 500, 600) at least based on a comparison of the measured temperature of the connector (100, 200, 300, 400, 500, 600) with at least one reference temperature, wherein the reference temperature is the determined temperature of at least one reference connector.

## Revendications

1. Fiche électrique (100, 200, 300, 400, 500, 600) sous forme d'une fiche moyenne tension (100, 200, 300, 400, 500, 600) ou haute tension (100, 200, 300, 400, 500, 600) pour un câble électrique (432, 532, 632), comprenant :
- au moins un module fiche (538, 540, 542, 546, 638, 640, 642, 646)
- au moins un boîtier (106, 206, 306, 406, 506) adapté pour accueillir le au moins un module fiche électrique (538, 540, 542, 546, 638, 640, 642, 646), où
- la fiche (100, 200, 300, 400, 500, 600) comprend au moins un guide d'ondes optiques (104, 204, 304, 404, 504, 604) disposé dans le boîtier (106, 206, 306, 406, 506) comme capteur de température (104, 204, 304, 404, 504, 604) d'un dispositif de mesure de température (214, 314, 414), et où
- le boîtier (106, 206, 306, 406, 506) est formé d'au moins une paroi (550, 650) ayant un côté intérieur (554, 654) et un côté extérieur (552, 652), **caractérisé en ce que** le au moins un module fiche électrique est un module de contrôle de champ électrique (546, 646),
- où le guide d'ondes optiques (104, 204, 304, 404, 504, 604) est au moins partiellement intégrée dans la paroi (550, 650), et
- le guide d'ondes optiques (104, 204, 304, 404, 504, 604) est disposé dans le boîtier (106, 206, 306, 406, 506) sous forme d'une pluralité d'enroulements (548, 648).

2. Fiche (100, 200, 300, 400, 500, 600) selon la revendication 1, **caractérisé en ce que**
- le boîtier (106, 206, 306, 406, 506) est formé d'au moins une paroi (550, 650) ayant un côté intérieur (554, 654) et un côté extérieur (552, 652),
- où le guide d'ondes optiques (104, 204, 304, 404, 504, 604) est disposé au moins partiellement sur le côté intérieur (554, 654) de la paroi (550, 650), en particulier entre en contact direct avec le côté intérieur (554, 654) de la paroi (550, 650).

3. Fiche (100, 200, 300, 400, 500, 600) selon l'une des revendications précédentes 1 à 3, **caractérisé en ce que**
- la pluralité d'enroulements (548, 648) est disposée de manière uniforme répartie sur le, de préférence sur l'ensemble du, boîtier (106, 206, 306, 406, 506).

4. Fiche (100, 200, 300, 400, 500, 600) selon l'une des revendications précédentes, **caractérisé en ce qu'**au moins un module de connecteur électrique additionnel (538, 540, 542, 546, 638, 640, 642, 646) est choisi du groupe comprenant :
- au moins un module de raccordement de câble (538, 542, 638, 642), en particulier un raccord d'entrée à vis ou à pression (538, 638) et/ou un raccord de sortie à vis ou à pression (542, 642),
- au moins un module d'insert de terminaison (540, 640), en particulier un insert de terminaison à vis (540, 640),
- au moins une électrode de contrôle.

5. Système de surveillance de température avec un dispositif de mesure de la température (214, 314, 414) pour des fiches électriques (100, 200, 300, 400, 500, 600), comprenant :
- au moins une fiche électrique (100, 200, 300, 400, 500, 600) selon l'une des revendications précédentes.
- au moins un guide d'ondes optiques (104, 204, 304, 404, 504, 604) disposé dans la fiche (100, 200, 300, 400, 500, 600) comme capteur de température (104, 204, 304, 404, 504, 604), et
- au moins un dispositif de mesure de température (210, 310, 410) connecté au guide d'ondes optiques (104, 204, 304, 404, 504, 604), comprenant au moins un module de mesure de température (212, 312, 412),
- où le module de mesure de température (212, 312, 412) est configuré à déterminer la température de la fiche (100, 200, 300, 400, 500, 600).
- au moins un dispositif d'évaluation (320, 420) raccordable au dispositif de mesure de température (210, 310, 410), comprenant au moins un module d'évaluation (326, 426),
- où le dispositif d'évaluation (320, 420) comprend au moins un module de comparaison (322, 422), configuré à comparer une température déterminée du connecteur (100, 200, 300, 400, 500, 600) avec au moins une température de référence,
- où la température de référence est la température déterminée d'au moins une fiche de référence, et
- le module d'évaluation (326, 426) est configuré à déterminer un défaut de fiche de la fiche (100, 200, 300, 400, 500, 600) sur la base du résultat de la comparaison.

6. Système de surveillance de température (318, 418) selon la revendication 5, **caractérisé en ce que**
- la fiche de référence est une fiche spatialement adjacente à la fiche à surveiller.

7. Système de surveillance de température (318, 418) selon la revendication 5 ou 6, **caractérisé en ce que**
- la fiche de référence est connectée à une première ligne de phase d'un câble électrique et la fiche à surveiller est connectée à une autre ligne de phase du même câble électrique.

8. Système de surveillance de température (318, 418) selon la revendication 7, **caractérisé en ce que**
- les trois lignes de phase d'un câble électrique sont chacune munie d'une fiche, et
- deux des trois fiches servent comme fiches de référence pour la fiche restante respective.

9. Système de surveillance de température (318, 418) selon l'une des revendications 5 à 8, **caractérisé en ce que**
- le module de mesure de température (212, 312, 412) est configuré à la détermination à résolution spatiale de la température de la fiche (100, 200, 300, 400, 500, 600) le long du guide d'ondes optiques (104, 204, 304, 404, 504, 604), et
- le module d'évaluation (326, 426) est configuré à déterminer un module de fiche défectueux particulier (538, 540, 542, 546, 638, 640, 642, 646) sur la base de la température déterminée à résolution spatiale de la fiche (100, 200, 300, 400, 500, 600).

10. Méthode de surveillance d'une fiche électrique (100, 200, 300, 400, 500, 600) selon l'une des revendications 1 à 4, comprenant :
- mesurer la température de la fiche (100, 200, 300, 400, 500, 600) utilisant un capteur de température (104, 204, 304, 404, 504, 604) intégré dans la fiche (100, 200, 300, 400, 500, 600),
- déterminer une erreur de fiche de la fiche (100, 200, 300, 400, 500, 600) au moins sur la base d'une comparaison de la température mesurée de la fiche (100, 200, 300, 400, 500, 600) et avec au moins une température de référence, où la température de référence est la température déterminée d'au moins une fiche de référence.
